# EUROPÄISCHE PATENTSCHRIFT

(11) **EP 1 844 622 B1**
(45) Veröffentlichungstag und Bekanntmachung des Hinweises auf die Patenterteilung: **03.09.2008**
(21) Anmeldenummer: 05797090.7
(22) Anmeldetag: 05.10.2005
(51) Int. Cl.: H04Q 7/36, H04Q 7/38, H04J 11/00

(54) **VERFAHREN ZUR GRUPPIERUNG UND ZUWEISUNG VON FUNKRESSOURCEN IN EINEM MULTICARRIER-SYSTEM**
METHOD FOR GROUPING AND ALLOCATING RADIO RESOURCES IN A MULTICARRIER SYSTEM
PROCEDE DE GROUPAGE ET D'AFFECTATION DE RESSOURCES RADIO DANS UN SYSTEME A ONDES PORTEUSES MULTIPLES

(30) Priorität: 28.01.2005 DE 102005004152
(43) Veröffentlichungstag der Anmeldung: 17.10.2007
(73) Patentinhaber: Nokia Siemens Networks GmbH & Co. KG, 81541 München (DE)
(72) Erfinder: COSTA, Elena, 81739 München (DE); SCHULZ, Egon, 80993 München (DE); UNGER, Timo, Marcus, 64589 Stockstadt (DE); KLEIN, Anja, 64287 Darmstadt (DE); FRANK, Tobias, 35305 Grünberg (DE)
(86) Internationale Anmeldenummer: PCT/EP2005/055013
(87) Internationale Veröffentlichungsnummer: WO 2006/079424

(56) Entgegenhaltungen:
- US-A1- 2003 210 648
- US-A1- 2004 081 130
- US-B1- 6 631 125

## Beschreibung

Die Erfindung betrifft ein Verfahren zur Gruppierung und Zuweisung von Funkressourcen in einem Funkkommunikationssystem, in welchem zur Kommunikation zwischen einer netzseitigen Funkstation und Teilnehmerstationen ein in eine Mehrzahl von Subträgern aufgeteiltes Frequenzband verwendet wird. Weiterhin betrifft die Erfindung eine netzseitige Einrichtung zur Durchführung des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme, z.B. nach den bekannten Standards GSM (Global System for Mobile Communication) oder UMTS (Universal Mobile Telecommunications System), mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Um eine möglichst effiziente Übertragung von Daten zu erreichen, zerlegt man das gesamte zur Verfügung stehende Frequenzband in mehrere Subträger (Multicarrier- bzw. Mehrträgerverfahren). Die den Mehrträgersystemen zugrunde liegende Idee ist es, das Ausgangsproblem der Übertragung eines breitbandigen Signals in die Übertragung mehrerer schmalbandiger Signale zu überführen. Dies hat u.a. den Vorteil, dass die am Empfänger erforderliche Komplexität reduziert werden kann. Ferner ermöglicht die Aufteilung der verfügbaren Bandbreite in mehrere schmalbandige Subträger eine deutlich höhere Granularität der Datenübertragung hinsichtlich der Verteilung der zu übertragenden Daten auf die unterschiedlichen Subträger, d.h., die Funkressourcen können mit einer großen Feinheit auf die zu übertragenden Daten bzw. auf die Teilnehmerstationen verteilt werden. Insbesondere bei Übertragungen mit variabler Datenrate oder bei burstartigem Datenverkehr kann die verfügbare Bandbreite durch die Zuweisung einer Anzahl von Subträgern an unterschiedliche Teilnehmerstationen effizient ausgenutzt werden.

Ein Beispiel für ein Mehrträgerübertragungsverfahren ist OFDM (Orthogonal Frequency Division Multiplexing) System, bei welchem für die Subträger zeitlich annähernd rechteckige Pulsformen verwendet werden. Der Frequenzabstand der Subträger wird derart gewählt, dass im Frequenzraum bei derjenigen Frequenz, bei welcher das Signal eines Subträgers ausgewertet wird, die Signale der anderen Subträger einen Nulldurchgang aufweisen. Somit sind die Subträger orthogonal zueinander. Durch den meist sehr geringen Abstand der Subträger und der Schmalbandigkeit der auf den einzelnen Subträger übertragenen Signale bei OFDM soll gewährleistet werden, dass die Übertragung innerhalb der einzelnen Subträger im allgemeinen nicht frequenzselektiv ist. Dies vereinfacht am Empfänger die Signalentzerrung.

Das Dokument US 2004/0081130 A1 beschreibt für ein Funkkommunikationssystem nach dem Standard UMTS die Verwendung von Channelisation Codes, welche gemäß einem Code Baum angeordnet sind.

Das Dokument US 2003/0210648 A1 beschreibt ein MC-DS/CDMA (Multicarrier Direct Sequence CDMA) System. Jedem Nutzer wird eine zweidimensionale Matrix zugewiesen. Die Spalten der Matrix geben hierbei den Spreizfaktor an, d.h. die Chips pro Datensymbol, und die Zeilen geben die zu verwendenden Frequenzen an. Die Matrizen sind gemäß einem Code Baum angeordnet.

Der Erfindung liegt die Aufgabe zugrunde, ein effizientes Verfahren zur Zuweisung von Funkressourcen in einem Mehrträgersystem aufzuzeigen. Weiterhin soll eine Einrichtung zur Durchführung des Verfahrens vorgestellt werden.

Diese Aufgabe wird durch ein Verfahren mit den Merkmalen des Anspruchs 1 und durch eine Vorrichtung mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zur Gruppierung und Zuweisung von Funkressourcen wird in dem Funkkommunikationssystem zur Kommunikation zwischen einer netzseitigen Funkstation und Teilnehmerstationen ein in eine Mehrzahl von Subträgern aufgeteiltes Frequenzband verwendet. Es wird eine Gruppierung der Subträger in Gruppen verschiedener Hierarchiestufen verwendet, gemäß welcher sich mit Ausnahme der Gruppen der niedrigsten Hierarchiestufe jede Gruppe aus den Subträgern von jeweils mindestens zwei Gruppen der nächst niedrigeren Hierarchiestufe zusammensetzt und gemäß welcher neben der niedrigsten Hierarchiestufe mehrere weitere Hierarchiestufen existieren. Den Teilnehmerstationen werden Gruppen von Subträgern gemäß dieser Gruppierung zugewiesen.

Das Funkkommunikationssystem umfasst zumindest eine netzseitige Funkstation und Teilnehmerstationen. Die Erfindung kann in Bezug auf eine oder mehrere netzseitige Funkstationen eingesetzt werden. Bei dem Funkkommunikationssystem kann es sich z.B. um ein zellulares oder ein lokales System handeln. Bei den Teilnehmerstationen kann es sich um stationäre oder mobile Funkstationen handeln, wie z.B. um Mobiltelefone, PDA's (Personal Digital Assistant), oder portable oder stationäre Computer.

Zur Kommunikation zwischen der netzseitigen Funkstation und den Teilnehmerstationen wird ein Frequenzband eingesetzt, welches in eine Mehrzahl an Subträgern aufgeteilt ist. Es handelt sich somit um ein Mehrträger-Kommunikationsverfahren. Es werden mehrere Subträger für die Nachrichtenversendung von den Teilnehmerstationen an die netzseitige Funkstation, d.h. für die Aufwärtsrichtung, und/oder für die Nachrichtenversendung von der netzseitigen Funkstation an die Teilnehmerstationen, d.h. für die Abwärtsrichtung, eingesetzt. Das Frequenzband ist vorzugsweise derart in Subträger untergliedert, dass alle Subträger die gleiche Frequenzbreite und somit den gleichen Frequenzabstand zueinander aufweisen.

Es wird eine hierarchische Gruppierung von Subträgern verwendet, wobei sich diese hierarchische Gruppierung auf einen Teil der Subträger des Frequenzbandes beziehen kann, vorzugsweise jedoch auf alle zur Kommunikation zwischen der netzseitigen Funkstation und den Teilnehmerstationen zur Verfügung stehenden Subträger. Auch kann ein Frequenzband in mehrere Teile oder Abschnitte aufgeteilt werden, wobei für jeden Teil eine eigene hierarchische Gruppierung erfolgt. Letzteres ist insbesondere dann von Vorteil, wenn sich durch die Aufteilung Anzahlen von Subträgern ergeben, welche sich besonders gut für eine hierarchische Gruppierung eignen. Auf diese Weise kann beispielsweise ein Frequenzband mit 384 Subträgern in einen ersten Teil mit 256 Subträgern und einen zweiten Teil mit 128 Subträgern aufgeteilt werden, da es sich bei 256 und 128 jeweils um 2er-Potenzen handelt.

Gemäß der hierarchischen Gruppierung existieren Gruppen der niedrigsten Hierarchiestufen, welche jeweils einen oder mehrere Subträger umfassen. Jede Gruppe einer höheren Hierarchiestufe wird aus den Subträgern von zwei oder mehreren Gruppen der jeweils nächst niedrigeren Hierarchiestufe gebildet. Vorzugsweise ist die hierarchische Gruppierung so ausgestaltet, dass jeder Subträger Bestandteil von genau einer Gruppe einer jeden Hierarchiestufe ist. Neben der Gruppe der niedrigsten Hierarchiestufe sind Gruppen von zumindest zwei weiteren Hierarchiestufen vorhanden, d.h. insgesamt werden drei oder mehr Hierarchiestufen verwendet.

Die Gruppen werden den Teilnehmerstationen zur Kommunikation zugewiesen. Hierbei können einer Teilnehmerstation eine oder mehrere Gruppen zugewiesen werden. Die Zuweisung kann sich auf die Kommunikation in Abwärtsrichtung und/oder in Aufwärtsrichtung beziehen, wobei vorzugsweise an alle mit der netzseitigen Funkstation kommunizierenden Teilnehmerstationen Subträger ausschließlich in Form von Gruppen gemäß der hierarchischen Gruppierung zugewiesen werden.

Neben eine Teilnehmerseparierung im Frequenzbereich, welche durch die erfindungsgemäße Zuweisung von Subträgern bewirkt werden kann, können auch andere Teilnehmerseparationsverfahren, wie z.B. CDMA zum Einsatz kommen. So kann die Erfindung beispielsweise vorteilhaft auf ein OFDMA MC-CDMA System angewandt werden

In Weiterbildung der Erfindung bestehen die Gruppen jeweils aus im Frequenzbereich benachbarten Subträgern. In diesem Fall bestehen die Gruppen der niedrigsten Hierarchiestufe aus einem Subträger oder mehreren direkt benachbarten Subträgern. Es existiert unabhängig von der Hierarchiestufe keine Gruppe, zwischen deren Subträgern ein Subträger liegt, der nicht der jeweiligen Gruppe angehört.

Einer anderen Weiterbildung der Erfindung gemäß bestehen die Gruppen jeweils aus Subträgern, welche im Frequenzbereich äquidistant sind und den größtmöglichen Frequenzabstand zueinander aufweisen. Der größtmögliche Frequenzabstand ergibt sich aus der vorgegebenen Breite des Frequenzbandes und der Bedingung, dass die Subträger äquidistant sein sollen. Sind beispielsweise 22 Subträger vorhanden und besteht die Gruppe aus 4 äquidistanten Subträgern, so ist der größtmögliche Frequenzabstand 5 Subträger.

Besonders vorteilhaft ist es, wenn die Zuweisung von Gruppen an Teilnehmerstationen für die Versendung von Nachrichten durch die netzseitige Funkstation erfolgt, d.h. für die Nachrichtenversendung in Abwärtsrichtung. Zusätzlich oder alternativ kann die Zuweisung von Gruppen an Teilnehmerstationen auch erfolgen für die Versendung von Nachrichten durch die jeweilige Teilnehmerstation.

Einer vorteilhaften Ausgestaltung der Erfindung gemäß signalisiert die netzseitige Funkstation den Teilnehmerstationen die Zuweisung der Gruppen, wobei eine den Teilnehmerstationen bekannte Zuordnungsvorschrift zwischen Signalisierungssymbolen und Gruppen verwendet wird. Auf diese Weise ermöglicht die Verwendung von hierarchischen Gruppen eine Einsparung von Funkressourcen bei der Signalisierung der Zuweisung.

Weiterhin ist es möglich, dass die netzseitige Funkstation zumindest einer Teilnehmerstation bezüglich zumindest einer Gruppe signalisiert, aus welchen Subträgern sich die jeweilige Gruppe zusammensetzt. Die Gruppenzusammensetzung kann betreffend eine Gruppe, mehrere Gruppen, oder alle Gruppen signalisiert werden. Dieses Vorgehen der Signalisierung der Gruppenzusammensetzung ist insbesondere dann vorteilhaft, wenn die Gruppierung der Subträger geändert wird. Nach einer Änderung kann den Teilnehmerstationen mitgeteilt werden, wie die neuen Gruppen aufgebaut sind oder zumindest welche Veränderung sich hinsichtlich der Gruppierung der Subträger ergeben haben, und gegebenenfalls jeder Gruppe ein Signalisierungssymbol zugeordnet und den Teilnehmerstationen mitgeteilt, so dass die Zuweisung der neuen Gruppen effizient signalisiert werden kann. Die Signalisierung der Gruppenzusammensetzung ist auch nützlich im Hinblick auf Teilnehmerstationen, welche die Kommunikation mit der netzseitigen Funkstation neu beginnen oder bei ihrer letzten Kommunikation mit der oder einer anderen netzseitigen Funkstation eine andere Gruppenzusammensetzung verwendet haben.

In Weiterbildung der Erfindung ist die Anzahl von Gruppen, aus deren Subträgern sich eine Gruppe der nächst höheren Hierarchiestufe zusammensetzt, für alle Gruppen gleich. Beispielsweise kann jede Gruppe, mit Ausnahme der Gruppen der niedrigsten Hierarchiestufe, aus den Subträgern von jeweils drei Gruppen der nächst niedrigeren Hierarchiestufe bestehen. Alternativ können zumindest zwei verschiedene Anzahlen von Gruppen, aus deren Subträgern sich eine Gruppe der nächst höheren Hierarchiestufe zusammensetzt, eingesetzt werden. In diesem Fall können beispielsweise Gruppen existieren, welche aus den Subträgern von drei Gruppen der nächst niedrigeren Hierarchiestufe bestehen, und Gruppen, welche aus den Subträgern von vier Gruppen der nächst niedrigeren Hierarchiestufe bestehen.

Mit Vorzug wird eine erste Gruppierung der Subträger in Gruppen verschiedener Hierarchiestufen verwendet, und im Anschluss eine zweite Gruppierung der Subträger in Gruppen verschiedener Hierarchiestufen. Auf diese Weise kann die hierarchische Gruppierung den aktuellen Gegebenheiten und Anforderungen angepasst werden, so z.B. dem Bandbreitenbedarf von Teilnehmerstationen, der Art der von Teilnehmerstationen genutzten Dienste, oder den Funkübertragungsbedingungen.

Einer Ausgestaltung der Erfindung gemäß erfolgt dann, wenn eine Teilnehmerstation Funkressourcen benötigt, eine Neuzuweisung von Gruppen an Teilnehmerstationen, welchen aktuell Funkressourcen zugewiesen sind. Die Neuzuweisung kann alle oder ein Teil der Teilnehmerstationen, welchen aktuell Funkressourcen in Form von Gruppen von Subträgern zugewiesen sind, betreffen. Eine Neuzuweisung bedeutet, dass zumindest manchen Teilnehmerstationen eine oder mehrere andere Gruppen zur Kommunikation zugewiesen werden, als ihnen zuvor zugewiesen waren. Vor der Neuzuweisung erfolgt vorzugsweise eine Prüfung, ob die Neuzuweisung nötig ist, oder ob der Teilnehmerstation, welche Funkressourcen benötigt, ohne Neuzuweisung eine oder mehrere Gruppen zugewiesen werden können.

Die erfindungsgemäße netzseitige Einrichtung für ein Funkkommunikationssystem weist Mittel auf zum Zuweisen von Gruppen von Subträgern an Teilnehmerstationen, wobei sich die Gruppen aus einer Gruppierung der Subträger in Gruppen verschiedener Hierarchiestufen ergeben, gemäß welcher sich mit Ausnahme der Gruppen der niedrigsten Hierarchiestufe jede Gruppe aus den Subträgern von mindestens zwei Gruppen der nächst niedrigeren Hierarchiestufe zusammensetzt und gemäß welcher neben der niedrigsten Hierarchiestufe mehrere weitere Hierarchiestufen existieren.

Die hierarchische Gruppierung kann von der erfindungsgemäßen netzseitigen Einrichtung vorgenommen werden, oder dieser vorgegeben werden. Bei der erfindungsgemäßen netzseitigen Einrichtung kann es sich um eine Einrichtung handeln, welche über die Zuweisung der Gruppen entscheidet und das Ergebnis der Entscheidung an eine Einrichtung weiterleitet, welche die Zuweisung an Teilnehmerstationen signalisiert, oder um eine Einrichtung, welche nicht über die Zuweisung entscheidet, sondern lediglich die Zuweisung an Teilnehmerstationen signalisiert, oder um eine Einrichtung, welche sowohl über die Zuweisung entscheidet als auch die Zuweisung an Teilnehmerstationen signalisiert. Die erfindungsgemäße netzseitige Einrichtung kann durch mehrere miteinander verbundene Einrichtungen realisiert werden.

Die erfindungsgemäße netzseitige Einrichtung eignet sich insbesondere zur Durchführung des erfindungsgemäßen Verfahrens, wobei dies auch auf die Ausgestaltungen und Weiterbildung zutreffen kann. Hierzu kann sie weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: eine hierarchische Gruppierung von Subträgern anhand einer Baumstruktur,
- Figur 3:: eine erste Zuordnung von Subträgern zu Gruppen,
- Figur 4:: eine zweite Zuordnung von Subträgern zu Gruppen.

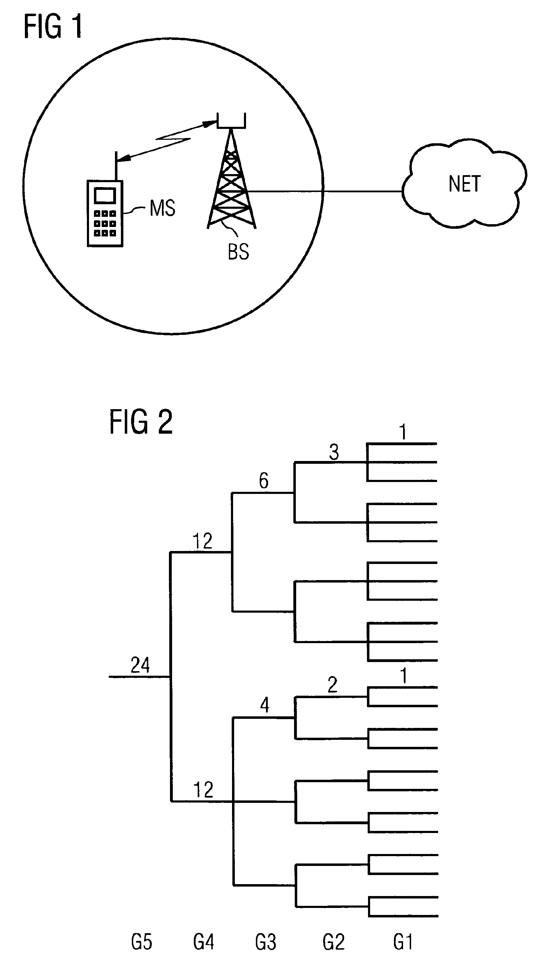

Der in Figur 1 dargestellt Ausschnitt aus einem Funkkommunikationssystem umfasst die Basisstation BS und die sich innerhalb des Funkabdeckungsbereiches der Basisstation BS befindliche Teilnehmerstation MS. Der Funkabdeckungsbereich der Basisstation BS ist schematisch als Kreis symbolisiert. Die Basisstation BS ist mit weiteren netzseitigen Einrichtungen NET verbunden. Bei dem betrachteten Funkkommunikationssystem kann es sich z.B. um ein zellulares oder ein lokales System handeln. Weitere Teilnehmerstationen und netzseitige Funkstationen können gegebenenfalls vorhanden sind, sind jedoch der Übersichtlichkeit halber nicht dargestellt.

Zur Kommunikation zwischen der Basisstation BS und der Teilnehmerstation MS wird ein Frequenzband eingesetzt, welches in eine Mehrzahl an gleich breiten Subträgern untergliedert ist. Zur Kommunikation, d.h. zur Versendung und/oder zum Empfang von Nachrichten, werden der Teilnehmerstation MS von der Basisstation BS eines, mehrere oder alle Subträger des Frequenzbandes zugewiesen. Die Zuweisung der Subträger kann sich auf die Kommunikation in Abwärtsrichtung, d.h. auf eine Nachrichtenversendung von der Basisstation BS an die Teilnehmerstation MS, beziehen, oder auf die Kommunikation in Aufwärtsrichtung, d.h. auf eine Nachrichtenversendung von der Teilnehmerstation MS an die Basisstation BS, oder sowohl auf die Kommunikation in Aufwärts- als auch in Abwärtsrichtung.

Gemäß der Erfindung ist es nicht möglich, der Teilnehmerstation MS beliebige Kombinationen von Subträgern zuzuweisen. Vielmehr werden die Subträger zu Gruppen zusammengefasst und ausschließlich diese Gruppen können der Teilnehmerstation MS zugewiesen werden. Figur 2 zeigt beispielhaft eine hierarchische Gruppierung von Subträgern gemäß der Erfindung, veranschaulicht anhand einer Baumstruktur. Es existieren mehrere Hierarchiestufen G1, G2, G3, G4 und G5, wobei es sich bei der Hierarchiestufe G5 um die höchste Hierarchiestufe handelt und bei der Hierarchiestufe G1 um die niedrigste Hierarchiestufe.

Gemäß der Figur 2 liegen insgesamt 24 Subträger vor, symbolisiert durch die 24 horizontalen Striche der niedrigsten Hierarchiestufe G1. Die Gruppen der niedrigsten Hierarchiestufe G1 bestehen jeweils aus einem Subträger. Im oberen Teil der Figur 2 werden jeweils drei Subträger der niedrigsten Hierarchiestufe G1 zu einer Gruppe der nächst höheren Hierarchiestufe G2 zusammengefasst, im unteren Teil der Figur 2 werden jeweils zwei Subträger der niedrigsten Hierarchiestufe G1 zu einer Gruppe der nächst höheren Hierarchiestufe G2 zusammengefasst. Die Hierarchiestufe G2 umfasst somit Gruppen, welche aus drei Subträgern bestehen, und Gruppen, welche aus zwei Subträgern bestehen. Weiterhin werden sowohl im oberen als auch im oberen Teil der Figur 2 jeweils zwei Gruppen der Hierarchiestufe G2 zu einer Gruppe der Hierarchiestufe G3 zusammengefasst. Die Hierarchiestufe G3 umfasst somit Gruppen, welche aus sechs Subträgern bestehen, und Gruppen, welche aus vier Subträgern bestehen. Die nächst höhere Hierarchiestufe G4 wird im oberen Teil der Figur 2 gebildet, indem jeweils zwei Gruppen der Hierarchiestufe G3 zu einer Gruppe der Hierarchiestufe G4 zusammengefasst werden, und im unteren Teil der Figur 2, indem jeweils drei Gruppen der Hierarchiestufe G3 zu einer Gruppe der Hierarchiestufe G4 zusammengefasst werden. Die beiden Gruppen der Hierarchiestufe G4 bestehen somit jeweils aus 12 Subträgern. Die beiden Gruppen der Hierarchiestufe G4 werden zu einer Gruppe der Hierarchiestufe G5 zusammengefasst, so dass die Gruppe der Hierarchiestufe G5 aus allen 24 Subträgern besteht. Die hierarchische Gruppierung gemäß Figur 2 stellt somit verschieden große Gruppen von Subträgern zur Verfügung, wobei die Gruppen aus einem, aus zwei, aus drei, aus vier, aus 6, aus 12 oder aus 24 Subträgern bestehen. Andere Anzahlen von Subträgern zur Zuweisung können dadurch erzeugt werden, dass einer Teilnehmerstation mehrere Gruppen zugewiesen werden, so z.B. eine Gruppe mit 4 Subträgern und eine Gruppe mit 6 Subträgern, so dass der Teilnehmerstation insgesamt 10 Subträger zugewiesen sind, obwohl keine Gruppe bestehend aus 10 Subträgern existiert.

Es besteht eine kleinste Anzahl an Subträgern, welche den Teilnehmerstationen zugewiesen werden kann, entsprechend der Größe der Gruppen der niedrigsten Hierarchiestufe G1. Bei dieser Anzahl an Subträgern handelt es sich um die kleinste zuweisbare Ressourceneinheit. Die Größe der kleinsten Ressourceneinheit kann in Abhängigkeit von der Gesamtanzahl der verfügbaren Subträger, der von Teilnehmern in dem Funkkommunikationssystem in Anspruch genommenen Dienste und der damit verbundenen Bandbreiten gewählt werden. Jede Gruppe einer höheren als der niedrigsten Hierarchiestufe G1 besteht aus einem ganzzahligen Vielfachen der kleinsten Anzahl. Für jeden Subträger gilt, dass er Bestandteil genau einer Gruppe einer jeden Hierarchiestufe ist. Somit kann ein Subträger nicht lediglich bei der Zuweisung genau einer bestimmten Anzahl an Subträgern an eine Teilnehmerstation zum Einsatz kommen, sondern vielmehr bei der Zuweisung jeder Anzahl an Subträgern, welche gemäß der vorgegebenen Gruppengrößen möglich ist.

Die Gruppen werden den Teilnehmerstationen abhängig von deren Bandbreitenbedarf zugewiesen. Benötigt ein Teilnehmer beispielsweise 6 Subträger zur Versendung oder zum Empfang von Nachrichten, so wird dem Teilnehmer vorzugsweise eine aus 6 Subträgern bestehende Gruppe der Hierarchiestufe G3 zugewiesen, oder eine aus vier Subträgern bestehende Gruppe der Hierarchiestufe G3 und eine aus zwei Subträgern bestehende Gruppe der Hierarchiestufe G2, oder sechs Gruppen der niedrigsten Hierarchiestufe G1.

In Figur 2 ist der Fall dargestellt, dass eine Gruppe sich jeweils aus den Subträgern von zwei oder drei Gruppen der nächst niedrigeren Hierarchiestufe zusammensetzt. Die Baumstruktur der Figur 2 dient hierbei der Veranschaulichung der hierarchischen Gruppierung der Subträger. Gemäß dieser Baumstruktur münden jeweils zwei oder drei Äste von rechts in einen Ast. Bei der in Figur 2 dargestellten Baumstruktur handelt es sich lediglich um ein Beispiel, so ist es alternativ möglich, dass für den ganzen Baum jeweils die gleiche Anzahl an Ästen von rechts in einen Ast münden, oder dass höhere Anzahlen als zwei oder drei Äste von rechts in einen Ast münden.

Sind die auf den Subträgern versendeten Signale nicht durch Verwendung von Vielfachzugriffsverfahren wie CDMA oder SDMA unterscheidbar, so sollte ein Subträger zu einem Zeitpunkt für die Kommunikation von lediglich einer Teilnehmerstation zugewiesen werden. In dem Baum der Figur 2 bedeutet dies, dass eine Gruppe eines Astes dann nicht zugewiesen werden darf, wenn die Gruppe eines weiter rechts liegenden Astes, welcher mit diesem Ast verbunden ist, zugewiesen ist. Hierdurch wird eine mehrfache Vergabe von Subträgern vermieden. Weiterhin kann aufgrund der hierarchischen Gruppierung bei der Zuweisung der Subträger auf eine effiziente Vergabe geachtet werden, indem z.B. für den Fall, dass eine Gruppe mit drei Subträgern der Hierarchiestufe G2 aktuell zugewiesen ist und dass ein Teilnehmer ebenfalls drei Subträger benötigt, die andere Gruppe mit drei Subträgern der Hierarchiestufe G2, welche mit dem gleichen Ast der Gruppe der Hierarchiestufe G3 verbunden ist, zugewiesen wird, bevor eine Gruppe der Hierarchiestufe G2, welche mit einem anderen Ast der Hierarchiestufe G3 verbunden ist, zugewiesen wird. Auf diese Weise werden die Gruppen mit einer höheren Anzahl von Subträgern möglichst wenig durch die Zuweisung von Gruppen mit einer niedrigeren Anzahl von Subträgern blockiert.

Benötigt eine Teilnehmerstation eine bestimmte Anzahl an Subträgern, und ist es aufgrund der bereits erfolgten Zuweisungen der Subträger nicht möglich, einen Ast bzw. eine Gruppe mit der bestimmten Anzahl an Subträgern zu finden, welcher an die Teilnehmerstation zugewiesen werden könnte, so kann unter der Bedingung, dass die Anzahl der noch nicht zugewiesenen Subträger über der bestimmten Anzahl liegt, eine Neuzuweisung der Subträger erfolgen. Dies bedeutet, dass Teilnehmerstationen, welchen aktuell eine oder mehrere Gruppen zugewiesen sind, anstelle dieser Gruppe oder Gruppen eine oder mehrere andere Gruppen zugewiesen werden. Dies entspricht in Bezug auf die zuvor zugewiesenen Subträger einem Intra-Zell-Handover.

Liegt die Anzahl an freien, d.h. nicht bereits zugewiesenen Subträgern unter der Anzahl der von einer Teilnehmerstation benötigten Subträger, so kann der Teilnehmerstation die größtmögliche Anzahl an freien Subträgern zugewiesen werden. Gegebenenfalls kann hierzu eine Neuzuweisung, d.h. Verschiebung der Gruppen zwischen den Teilnehmerstationen, der bereits zugewiesenen Gruppen erfolgen. Ist eine Gruppe mit der Anzahl der benötigten Subträger aktuell nicht frei, während eine Gruppe mit einer höheren Anzahl an Subträgern frei ist, so kann der Teilnehmerstation die größere Gruppe anstelle der benötigten zugewiesen werden.

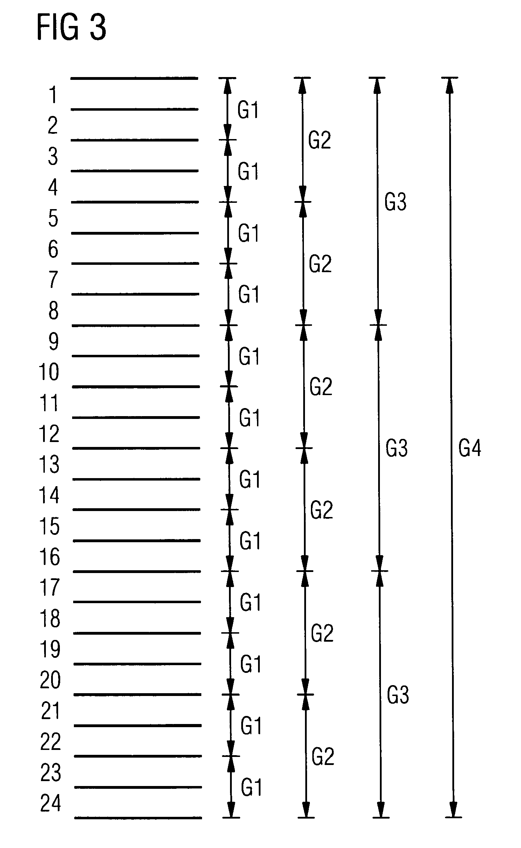

Bei den Subträgern, welche in Gruppen zusammengefasst werden, kann es sich z.B. um benachbarte Subträger handeln, wie in Figur 3 dargestellt. Das in Figur 3 betrachtete Frequenzband weist 24 Subträger auf, durch mit den Zahlen 1 bis 24 nummerierte horizontale Balken symbolisiert. Die kleinste Anzahl an zuweisbaren Subträgern sei 2. Somit existieren 12 Gruppen der niedrigsten Hierarchiestufe G1, bestehen jeweils aus 2 benachbarten Subträgern. Jeweils zwei benachbarte Gruppen der Hierarchiestufe G1 werden zu einer Gruppe der Hierarchiestufe G2 zusammengefasst, so dass jede der 6 Gruppen der Hierarchiestufe G2 aus 4 benachbarten Subträgern besteht. Weiterhin werden jeweils zwei benachbarte Gruppen der Hierarchiestufe G2 zu einer Gruppe der Hierarchiestufe G3 zusammengefasst, so dass jede der drei Gruppen der Hierarchiestufe G3 aus 8 benachbarten Subträgern besteht. Die drei Gruppen der Hierarchiestufe G3 werden zu einer Gruppe der Hierarchiestufe G4 zusammengefasst, welche aus allen 24 Subträgern besteht.

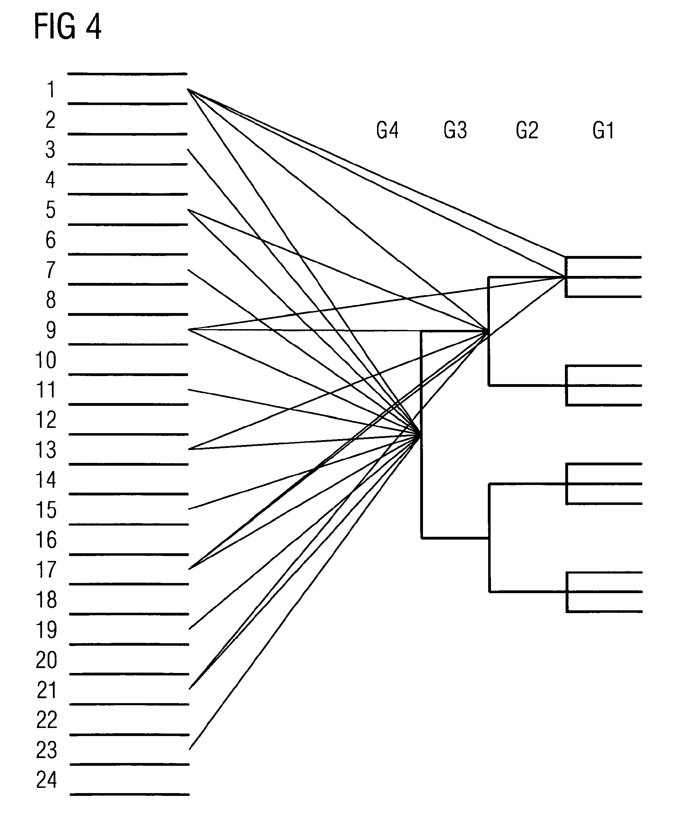

Bei den Subträgern, welche in Gruppen zusammengefasst werden, kann es sich auch um Subträger handeln, welche zueinander jeweils den gleichen größtmöglichen Frequenzabstand aufweisen, wie in Figur 4 dargestellt. Das in Figur 4 betrachtete Frequenzband weist 24 Subträger auf, durch mit den Zahlen 1 bis 24 nummerierte horizontale Balken symbolisiert. Auf der rechten Seite der Figur 4 ist der obere Teil des Baumes der Figur 2 dargestellt. Abgebildet sind die niedrigste Hierarchiestufe G1, deren 12 Gruppen jeweils einen Subträger beinhalten, die nächst höhere Hierarchiestufe G2, deren vier Gruppen jeweils drei Subträger beinhalten, die nächst höhere Hierarchiestufe G3, deren zwei Gruppen jeweils sechs Subträger beinhalten, und die nächst höhere Hierarchiestufe G4, deren Gruppe 12 Subträger beinhaltet.

Die aus 12 Subträgern bestehende Gruppe der Hierarchiestufe G4 beinhaltet die Subträger 1, 3, 5, 7, 9, 11, 13, 15, 17, 19, 21 und 23. Zwischen allen Subträgern dieser Gruppe existiert ein Frequenzabstand von 2 Subträgern. Die obere der beiden jeweils aus 6 Subträgern bestehenden Gruppe der Hierarchiestufe G3 beinhaltet die Subträger 1, 5, 9, 13, 17 und 21, die untere die Subträger 3, 7, 11, 15, 19 und 23. Die oberste der vier jeweils aus drei Subträgern bestehenden Gruppen der Hierarchiestufe G2 beinhaltet die Subträger 1, 9 und 17, die zweite von oben die Subträger 3, 11, und 19, die dritte die Subträger 5, 13 und 21, und die unterste die Subträger 7, 15 und 23. Die Gruppen der niedrigsten Hierarchiestufe G1 bestehen jeweils aus nur einem Subträger, die oberste Gruppe wird gebildet aus dem Subträger 1, die zweite aus dem Subträger 3, die dritte aus dem Subträger 5, die vierte aus dem Subträger 7, die fünfte aus dem Subträger 9, die sechste aus dem Subträger 11, die siebte aus dem Subträger 13, die achte aus dem Subträger 15, die neunte aus dem Subträger 17, die zehnte aus dem Subträger 19, die elfte aus dem Subträger 21, und die zwölfte aus dem Subträger 23.

Die Gruppen des unteren Teils der Figur 2 sind der Übersichtlichkeit halber nicht in Figur 4 dargestellt. Die Zuordnung der Subträger zu diesen Gruppen folgt gemäß dem Schema der Figur 4: die aus 12 Subträgern bestehende Gruppe der Hierarchiestufe G4 beinhaltet die Subträger 2, 4, 6, 8, 10, 12, 14, 16, 18, 20, 22 und 24. Die oberste Gruppe der Hierarchiestufe G3 besteht aus den Subträgern 2, 8, 14 und 20, die mittlere aus den Subträgern 4, 10, 16 und 22, und die unterste aus den Subträgern 6, 12, 18 und 24, usw.

Die Subträger einer Gruppe gemäß Figur 4 sind äquidistant, d.h. sie weisen jeweils den gleichen Frequenzabstand voneinander auf, wobei dieser Frequenzabstand der maximal mögliche ist. So weisen beispielsweise die Subträger der Gruppen der Hierarchiestufe G3 einen Frequenzabstand von 4 Subträgern auf. Da insgesamt 24 Subträger vorhanden sind und die Gruppen der Hierarchiestufe G3 jeweils 6 Subträger aufweisen, ist dies der maximal mögliche Frequenzabstand.

Da in Figur 4 in Bezug auf alle Gruppen der Frequenzabstand zwischen den einzelnen Subträgern der jeweiligen Gruppe maximal ist, genügt es zur Identifizierung derjenigen Subträger, aus welchen eine Gruppe besteht, die Anzahl der Subträger der Gruppe anzugeben und den Subträger mit der kleinsten Nummer. So genügt beispielsweise die Angabe, dass die Gruppe der Hierarchiestufe G2 angehört und dass der erste Subträger der Gruppe der Subträger 3 ist, um zu erkennen, dass die Gruppe aus den Subträgern 3, 11 und 19 besteht.

Die einer Teilnehmerstation zugewiesenen Subträger müssen der Teilnehmerstation von der Basisstation signalisiert werden.

Dadurch, dass gemäß der Erfindung nicht jede beliebige Kombination von Subträgern zuweisbar ist, sondern lediglich die gemäß der hierarchischen Gruppierung erzeugten Gruppen von Subträgern, reduziert sich der Signalisierungsaufwand. Dies ist umso ausgeprägter, je größer die Anzahl vorhandener Subträger und somit die Anzahl der Kombinationsmöglichkeiten der Subträger ist, und weiterhin je geringer die Anzahl der Gruppen ist. Zur Signalisierung der Zuweisung der hierarchischen Gruppen liegen sowohl der Basisstation oder derjenigen netzseitigen Einrichtung, welche für die Zuweisung von Ressourcen zuständig ist, als auch der jeweiligen Teilnehmerstation eine Zuordnungstabelle zwischen den Gruppen bzw. den Subträgern, aus welchen die Gruppen bestehen, und den zur Signalisierung der Zuweisung verwendeten Signalisierungssymbolen vor.

Während die erfindungsgemäße Gruppierung von Subträgern anhand eines Systems mit 24 Subträgern beschrieben wurde, kann die Erfindung auf ein System mit einer beliebigen Mehrzahl an für eine Kommunikationsrichtung zur Verfügung stehenden Subträgern angewandt werden. Die konkrete Anzahl der Subträger hängt u.a. von der zur Verfügung stehenden Bandbreite und dem Übertragungsverfahren ab.

Die Aufteilung der Subträger in die hierarchischen Gruppen findet vorzugsweise vor Beginn des Betriebs des Funkkommunikationssystems statt, z.B. beim Setup des Systems. Die hierbei festgelegten Gruppen werden dann bei der Zuweisung der Subträger an Teilnehmerstationen verwendet. Es ist jedoch auch möglich, dass dynamisch von einer hierarchischen Gruppierung der Subträger zu einer anderen hierarchischen Gruppierung der Subträger gewechselt wird, so z.B. von einer Baumstruktur gemäß dem unteren Teil der Figur 2 zu einer Baumstruktur gemäß dem oberen Teil der Figur 2. Die Veränderung der Baumstruktur kann den aktuellen Anforderungen des Systems bzw. der Nutzer angepasst werden.

Die Erfindung ermöglicht eine dynamische Zuweisung von Subträgern, da jeder Subträger einer Gruppe einer jeden Hierarchiestufe angehört. Auf diese Weise kann jeder Subträger sowohl für eine Verbindung mit einer großen als auch mit einer kleinen Bandbreite zugewiesen werden.

Neben der Separierung der Kommunikationen verschiedener Teilnehmerstationen im Frequenzbereich durch die Verwendung verschiedener Subträger kann eine weitere Separierung z.B. durch die Verwendung von Codes zum Einsatz kommen. Hierzu kann eine mehrdimensionale Baumstruktur im Frequenz- und Codebereich herangezogen werden.

Die zur Verfügung stehenden Subträger bzw. Gruppen müssen nicht alle zur Zuweisung an Teilnehmerstationen verwendet werden. Vielmehr ist es vorteilhaft, bestimmte Subträger oder Gruppen statisch einem bestimmten Zweck zuzuordnen, wie z.B. zur Verwendung als Broadcast-Kanal oder Synchronisations-Kanal.

## Patentansprüche

1. Verfahren zur Gruppierung und Zuweisung von Funkressourcen in einem Funkkommunikationssystem,
in welchem zur Kommunikation zwischen einer netzseitigen Funkstation (BS) und Teilnehmerstationen (MS) ein in eine Mehrzahl von Subträgern aufgeteiltes Frequenzband verwendet wird,
**dadurch gekennzeichnet,**
**dass** eine Gruppierung der Subträger in Gruppen verschiedener Hierarchiestufen (G1, G2, G3, G4, G5) verwendet wird, gemäß welcher sich mit Ausnahme der Gruppen der niedrigsten Hierarchiestufe (G1) jede Gruppe aus den Subträgern von jeweils mindestens zwei Gruppen der nächst niedrigeren Hierarchiestufe (G1, G2, G3, G4) zusammensetzt und gemäß welcher neben der niedrigsten Hierarchiestufe (G1) mehrere weitere Hierarchiestufen (G2, G3, G4, G5) existieren,
wobei die Gruppen jeweils aus Subträgern bestehen, welche im Frequenzbereich äquidistant sind und den größtmöglichen Frequenzabstand zueinander aufweisen,
und **dass** den Teilnehmerstationen (MS) Gruppen von Subträgern gemäß dieser Gruppierung zugewiesen werden.

2. Verfahren nach Anspruch 1,
**dadurch gekennzeichnet,**
**dass** die Zuweisung von Gruppen an Teilnehmerstationen (MS) erfolgt für die Versendung von Nachrichten durch die netzseitige Funkstation (BS).

3. Verfahren nach einem der Ansprüche 1 bis 2,
**dadurch gekennzeichnet,**
**dass** die Zuweisung von Gruppen an Teilnehmerstationen (MS) erfolgt für die Versendung von Nachrichten durch die jeweilige Teilnehmerstation (MS).

4. Verfahren nach einem der Ansprüche 1 bis 3,
**dadurch gekennzeichnet,**
**dass** die netzseitige Funkstation (BS) den Teilnehmerstationen (MS) die Zuweisung der Gruppen unter Verwendung einer den Teilnehmerstationen (MS) bekannten Zuordnungsvorschrift zwischen Signalisierungssymbolen und Gruppen signalisiert.

5. Verfahren nach einem der Ansprüche 1 bis 4,
**dadurch gekennzeichnet,**
**dass** die netzseitige Funkstation (BS) zumindest einer Teilnehmerstation (MS) bezüglich zumindest einer Gruppe signalisiert, aus welchen Subträgern sich die jeweilige Gruppe zusammensetzt.

6. Verfahren nach einem der Ansprüche 1 bis 5,
**dadurch gekennzeichnet,**
**dass** die Anzahl von Gruppen, aus deren Subträgern sich eine Gruppe der nächst höheren Hierarchiestufe (G2, G3, G4, G5) zusammensetzt, für alle Gruppen gleich ist,
oder
**dass** zumindest zwei verschiedene Anzahlen von Gruppen, aus deren Subträgern sich eine Gruppe der nächst höheren Hierarchiestufe (G2, G3, G4, G5) zusammensetzt, eingesetzt werden.

7. Verfahren nach einem der Ansprüche 1 bis 6,
**dadurch gekennzeichnet,**
**dass** eine erste Gruppierung der Subträger in Gruppen verschiedener Hierarchiestufen (G1, G2, G3, G4, G5) verwendet wird, und im Anschluss eine zweite Gruppierung der Subträger in Gruppen verschiedener Hierarchiestufen (G1, G2, G3, G4, G5).

8. Verfahren nach einem der Ansprüche 1 bis 7,
**dadurch gekennzeichnet,**
**dass**, wenn eine Teilnehmerstation (MS) Funkressourcen benötigt, eine Neuzuweisung von Gruppen an Teilnehmerstationen (MS), welchen aktuell Funkressourcen zugewiesen sind, erfolgt.

9. Netzseitige Einrichtung (NET, BS) für ein Funkkommunikationssystem, in welchem zur Kommunikation zwischen einer netzseitigen Funkstation (BS) und Teilnehmerstationen (MS) ein in eine Mehrzahl von Subträgern aufgeteiltes Frequenzband verwendet wird,
**gekennzeichnet durch**
Mittel zum Zuweisen von Gruppen von Subträgern an Teilnehmerstationen (MS), wobei sich die Gruppen aus einer Gruppierung der Subträger in Gruppen verschiedener Hierarchiestufen (G1, G2, G3, G4, G5) ergeben, gemäß welcher sich mit Ausnahme der Gruppen der niedrigsten Hierarchiestufe (G1) jede Gruppe aus den Subträgern von mindestens zwei Gruppen der nächst niedrigeren Hierarchiestufe (G1, G2, G3, G4) zusammensetzt und gemäß welcher neben der niedrigsten Hierarchiestufe (G1) mehrere weitere Hierarchiestufen (G2, G3, G4, G5) existieren, wobei die Gruppen jeweils aus Subträgern bestehen, welche im Frequenzbereich äquidistant sind und den größtmöglichen Frequenzabstand zueinander aufweisen.

## Claims

1. Method for grouping and allocating radio resources in a radio communication system,
in which a network-end radio station (BS) and subscriber stations (MS) communicate using a frequency band which is split into a plurality of subcarriers,
**characterized**
**in that** a grouping of the subcarriers into groups on different hierarchy levels (G1, G2, G3, G4, G5) is used, on the basis of which, with the exception of the groups on the lowest hierarchy levels (G1), each group is made up of the subcarriers from at least two respective groups on the next lowest hierarchy level (G1, G2, G3, G4), and on the basis of which a plurality of further hierarchy levels (G2, G3, G4, G5) exist besides the lowest hierarchy level (G1),
wherein the groups respectively comprise subcarriers which are equidistant in the frequency range and have the greatest possible frequency spacing from one another,
and **in that** the subscriber stations (MS) are allocated groups of subcarriers on the basis of this grouping.

2. Method according to Claim 1,
**characterized**
**in that** groups are allocated to subscriber stations (MS) for the network-end radio station (BS) to send messages.

3. Method according to one of Claims 1 and 2,
**characterized**
**in that** groups are allocated to subscriber stations (MS) for the respective subscriber station (MS) to send messages.

4. Method according to one of Claims 1 to 3,
**characterized**
**in that** the network-end radio station (BS) signals to the subscriber stations (MS) the allocation of the groups using an association rule between signalling symbols and groups which is known to the subscriber stations (MS).

5. Method according to one of Claims 1 to 4,
**characterized**
**in that** the network-end radio station (BS) signals to at least one subscriber station (MS), for at least one group, which subcarriers make up the respective group.

6. Method according to one of Claims 1 to 5,
**characterized**
**in that** the number of groups whose subcarriers make up a group on the next highest hierarchy level (G2, G3, G4, G5) is the same for all groups, or
**in that** at least two different numbers of groups whose subcarriers make up a group on the next highest hierarchy level (G2, G3, G4, G5) are used.

7. Method according to one of Claims 1 to 6,
**characterized**
**in that** a first grouping of the subcarriers into groups on different hierarchy levels (G1, G2, G3, G4, G5) is used, and subsequently a second grouping of the subcarriers into groups on different hierarchy levels (G1, G2, G3, G4, G5).

8. Method according to one of Claims 1 to 7,
**characterized**
**in that**, when a subscriber station (MS) requires radio resources, groups are reallocated to subscriber stations (MS) which currently have radio resources allocated to them.

9. Network-end device (NET, BS) for a radio communication system, in which a network-end radio station (BS) and subscriber stations (MS) communicate using a frequency band which is split into a plurality of subcarriers,
**characterized by**
means for allocating groups of subcarriers to subscriber stations (MS), wherein the groups are obtained from a grouping of the subcarriers into groups on different hierarchy levels (G1 G2, G3, G4, G5), on the basis of which, with the exception of the groups on the lowest hierarchy level (G1), each group is made up of the subcarriers from at least two groups on the next lowest hierarchy level (G1, G2, G3, G4), and on the basis of which a plurality of further hierarchy levels (G2, G3, G4, G5) exist besides the lowest hierarchy level (G1), the groups respectively comprising subcarriers which are equidistant in the frequency range and have the greatest possible frequency spacing from one another.

## Revendications

1. Procédé pour le groupage et l'affectation de ressources radio dans un système de radiocommunication,
dans lequel une bande de fréquences répartie en une pluralité de sous-porteuses est utilisée pour la communication entre une station radio (BS) côté réseau et des postes d'abonnés (MS),
**caractérisé en ce que**
un groupement de sous-porteuses est utilisé dans des groupes de différents niveaux de hiérarchie (G1, G2, G3, G4, G5), selon lequel, à l'exception des groupes du niveau de hiérarchie le plus bas (G1), chaque groupe se compose des sous-porteuses de respectivement au moins deux groupes du niveau de hiérarchie immédiatement le plus bas (G1, G2, G3, G4) et selon lequel plusieurs autres niveaux de hiérarchie (G2, G3, G4, G5) existent parallèlement au niveau de hiérarchie le plus bas (G1),
les groupes étant constitués chacun de sous-porteuses, qui sont équidistantes dans la plage de fréquence et présentent l'écartement de fréquence maximal,
et **en ce que** des groupes de sous-porteuses sont affectés aux postes d'abonnés (MS) selon ce groupement.

2. Procédé selon la revendication 1,
**caractérisé en ce que**
l'affectation de groupes à des postes d'abonnés (MS) s'effectue pour l'envoi de messages par la station radio côté réseau (BS).

3. Procédé selon l'une quelconque des revendications 1 à 2,
**caractérisé en ce que**
l'affectation de groupes à des postes d'abonnés (MS) s'effectue pour l'envoi de messages par la station d'abonné respective (MS).

4. Procédé selon l'une quelconque des revendications 1 à 3,
**caractérisé en ce que**
la station radio (BS) côté réseau signale aux postes d'abonnés (MS) l'affectation des groupes en utilisant une spécification d'attribution connue des postes d'abonnés (MS) entre des symboles de signalisation et des groupes.

5. Procédé selon l'une quelconque des revendications 1 à 4,
**caractérisé en ce que**
la station radio (BS) côté réseau signale à au moins un poste d'abonné (MS) en ce qui concerne au moins un groupe, de quelles sous-porteuses se compose le groupe concerné.

6. Procédé selon l'une quelconque des revendications 1 à 5,
**caractérisé en ce que**
le nombre de groupes, des sous-porteuses desquels se compose un groupe du niveau de hiérarchie immédiatement supérieur (G2, G3, G4, G5), est identique pour tous les groupes, ou
**en ce qu'**au moins deux nombres différents de groupes, des sous-porteuses desquels se compose un groupe du niveau de hiérarchie immédiatement supérieur (G2, G3, G4, G5), sont utilisés.

7. Procédé selon l'une quelconque des revendications 1 à 6,
**caractérisé en ce que**
un premier groupement des sous-porteuses est utilisé dans des groupes de différents niveaux de hiérarchie (G1, G2, G3, G4, G5), et par la suite un second groupement des sous-porteuses est utilisé dans des groupes de différents niveaux de hiérarchie (G1, G2, G3, G4, G5).

8. Procédé selon l'une quelconque des revendications 1 à 7,
**caractérisé en ce que**
lorsqu'un poste d'abonné (MS) a besoin de ressources radio, on procède à une nouvelle affectation de groupes à des postes d'abonnés (MS), auxquels des ressources radio sont attribuées actuellement.

9. Equipement côté réseau (NET, BS) pour un système de radiocommunication, dans lequel une bande de fréquences répartie en une pluralité de sous-porteuses est utilisée pour la communication entre une station radio (BS) côté réseau et des postes d'abonnés (MS),
**caractérisé par**
des moyens pour l'affectation de groupes de sous-porteuses à des postes d'abonnés (MS), les groupes étant obtenus à partir d'un groupement des sous-porteuses dans des groupes de différents niveaux de hiérarchie (G1, G2, G3, G4, G5), selon lequel, à l'exception des groupes du niveau de hiérarchie le plus bas (G1), chaque groupe se compose des sous-porteuses d'au moins deux groupes du niveau de hiérarchie immédiatement inférieur (G1, G2, G3, G4) et selon lequel plusieurs autres niveaux de hiérarchie (G2, G3, G4, G5) existent parallèlement au niveau de hiérarchie le plus bas (G1), les groupes étant constitués chacun de sous-porteuses, qui sont équidistantes dans la plage de fréquence et présentent l'écartement de fréquence le plus grand possible les uns par rapport aux autres.
